# EUROPÄISCHE PATENTSCHRIFT

(11) **EP 2 609 581 B1**
(45) Veröffentlichungstag und Bekanntmachung des Hinweises auf die Patenterteilung: **23.01.2019**
(21) Anmeldenummer: 11731371.8
(22) Anmeldetag: 14.07.2011
(51) Int. Cl.: G08B 21/02, G01P 5/00, G05B 15/02, G05B 19/042, G06F 3/0346, H04Q 9/00, H04W 52/02, H04W 88/02, G01P 15/00

(54) **VERFAHREN UND VORRICHTUNG ZUR STEUERUNG EINES GERÄTS**
METHOD AND DEVICE FOR CONTROLLING AN APPARATUS
PROCÉDÉ ET DISPOSITIF DE COMMANDE D'UN APPAREIL

(30) Priorität: 26.08.2010 DE 102010039837
(43) Veröffentlichungstag der Anmeldung: 03.07.2013
(73) Patentinhaber: Robert Bosch GmbH, 70442 Stuttgart (DE)
(72) Erfinder: SCHIFFERDECKER, Daniel, 72072 Tuebingen (DE); BENNINI, Fouad, 72762 Reutlingen (DE); BARTHOLOMEYCZIK, Julian, 72762 Reutlingen (DE); SCHEIERMANN, Sergej, 72800 Eningen (DE)
(86) Internationale Anmeldenummer: PCT/EP2011/062025
(87) Internationale Veröffentlichungsnummer: WO 2012/025296

(56) Entgegenhaltungen:
- WO-A2-2009/037612
- US-A1- 2008 234 935
- US-A1- 2010 181 988
- US-B1- 7 350 394

## Beschreibung

### Stand der Technik

Die Erfindung geht aus von einem Verfahren nach dem Oberbegriff des Anspruchs 1 und von einer Vorrichtung nach dem Oberbegriff des Anspruchs 7.

Zur Steuerung von Geräten sind Sensoren Standardkomponenten in Mobiltelefonen, Sicherheits- und Gesundheitsanwendungen. Kombinationen von verschiedenen Sensoren, sog. Sensorcluster, die von "smart Software" gesteuert werden, drängen auf den Markt, wobei z.B. Mobiltelefone mit Beschleunigungssensoren, Magnetsensoren und Gyroskopen zusammen mit "smart Software" ausgestattet werden. Die Kundenerfahrung und der Wert für den Kunden werden durch die Anwendungssoftware und/oder sogenannten "use cases" bestimmt, die die von den kombinierten Sensoren erzeugten Daten und die durch die Software berechneten Ergebnisse verwenden. Die Software ist daher die Schlüsselkomponente, die in einen Mikrokontroller implementiert sein kann, der die Sensoren betreibt, oder in die System-CPU implementiert ist (z.B. eine Linux Bibliothek in einem Android Mobiltelefon) oder als benutzerinstallierte Anwendung vorhanden ist. Anwendungen wie z.B. Portrait/Landscape Bildorientierung, Kompass oder Berührungsdetektion) sind herkömmlicherweise als unabhängige Softwarepakete implementiert, und erfordern jede einzelne für sich rohe Eingabedaten von den verschiedenen Sensoren. Zwar offenbart Druckschrift US 6525658 B2 die Identifizierung von Ereignissen ausgehend von verschiedenen Sensortypen, allerdings wird keine Zuordnung von Ereignissen zu höherwertigen Anwendungen offenbart. Die Implementierung gemäß dem Stand der Technik weist die folgenden Nachteile. Die Druckschriften WO2009/0367612 und US2010/181988 beschreiben Systemen welche Ereignissen Identifizieren.

Erstens ist keine optimale Energiesparfunktion möglich. Der Energieverbrauch wird durch die Wachzeit jedes einzelnen Sensors bestimmt (je länger die Schlafphasen zwischen den Wachphasen umso geringer ist der Energieverbrauch) und durch die Laufzeit der Software selbst in der System CPU. Wenn alle Anwendungen unabhängig voneinander laufen, dann muss dieselbe Datenabfrage und dieselbe Ereigniskalkulation für jede Anwendung durchgeführt werden. Es gibt in diesem Fall keine gemeinsame Verwendung von Sensordaten für alle Anwendungen. Weiterhin muss für jede Anwendung gefiltert werden (z.B. Rauschreduktion oder Offsetkorrektur), wodurch Rechenzeit und Speicherkapazität benötigt wird. Jede Anwendung erfordert Daten von verschiedenen Sensoren in verschiedenen Bandbreiten und verschiedenen Ausleseraten um die Anforderungen der Algorithmen zu erfüllen. Außerdem gibt es keine Logik, die es erlaubt, besonders ressourcenintensive Berechnungen zu deaktivieren, wenn sie nicht benötigt werden. Weiterhin ist nachteilig, dass das Hinzufügen oder Entfernen von Anwendungen eine komplette Revalidierung der Steuersoftware erfordert. Weiterhin erfordert nachteilig der Austausch von Sensoren eine Neuanpassung der Datenabfrage und der Berechnungseinheiten. Weiterhin ist es nachteilig nicht möglich, die Berechnungsergebnisse gegenseitig zu validieren. Weiterhin ist es nachteilig nicht möglich, dass der Benutzer eigene Anwendungen erschaffen und implementieren kann. Weiterhin ist es nachteilig nicht möglich, die Berechnungsergebnisse zu synchronisieren.

Es ist daher Aufgabe der vorliegenden Erfindung, ein Verfahren zur Verfügung zu stellen, das die Nachteile des Stands der Technik nicht aufweist.

### Offenbarung der Erfindung

Zur Lösung der Aufgabe wird ein Verfahren zur Steuerung eines elektrischen Geräts mit einer Sensoreinheit vorgeschlagen, wobei das Gerät in einem ersten potentiellen Bewegungsmodus und/oder in einem zweiten potentiellen Bewegungsmodus betrieben wird, wobei in der Sensoreinheit ein Sensorsignal erzeugt wird, wobei in Abhängigkeit einer Anforderung zur Zurverfügungstellung einer ersten Information hinsichtlich des Vorliegens des ersten potentiellen Bewegungsmodus und/oder einer zweiten Information hinsichtlich des Vorliegens des zweiten potentiellen Bewegungsmodus die erste Information und/oder die zweite Information in Abhängigkeit des Sensorsignals berechnet wird.

Das Gerät umfasst beispielsweise ein Mobilfunkgerät, ein Mobiltelefon, ein Sicherheits- oder Überwachungsgerät und/oder ein Gesundheitsüberwachungsgerät. Der erste und/oder zweite Bewegungsmodus umfasst beispielsweise die Frei-Fallerkennung und/oder eine Drehungsbestimmung. Die erste und/oder zweite Information umfasst beispielsweise die Aussage "Gerät befindet sich im freien Fall" und/oder "Gerät wurde um 30° um die X-Achse gedreht".

Das erfindungsgemäße Verfahren hat gegenüber dem Stand der Technik den Vorteil, dass eine optimale Energiesparfunktion möglich ist. Die Wachzeit jedes einzelnen Sensors bestimmt ist erheblich reduzierbar und auch die Laufzeit der Software selbst in der System CPU ist erheblich verringerbar. Da Berechnungen nicht unabhängig voneinander laufen, muss dieselbe Datenabfrage und dieselbe Ereigniskalkulation nicht mehr für jede Anwendung durchgeführt werden. Es gibt in diesem Fall eine gemeinsame Verwendung von Sensordaten für alle Anwendungen. Weiterhin muss nicht mehr für jede Anwendung gefiltert werden (z.B. Rauschreduktion oder Offsetkorrektur), wodurch Rechenzeit und Speicherkapazität erheblich verringert wird. Außerdem gibt es eine Logik, die es erlaubt, besonders ressourcenintensive Berechnungen zu deaktivieren, wenn sie nicht benötigt werden. Weiterhin ist das Hinzufügen oder Entfernen von Anwendungen ohne komplette Revalidierung der Steuersoftware möglich. Weiterhin erfordert der Austausch von Sensoren keine Neuanpassung der Datenabfrage und der Berechnungseinheiten. Weiterhin ist es möglich, die Berechnungsergebnisse gegenseitig zu validieren. Weiterhin ist es möglich, dass der Benutzer eigene Anwendungen erschaffen und implementieren kann. Weiterhin ist es möglich, die Berechnungsergebnisse zu synchronisieren.

Eine große Anzahl an Anwendungen (Berührungsdetektion, Schrittzählen) basieren auf einem Satz an fundamentalen Ereignissen. Ein Ereignis ist beispielsweise ein Gierratengrenzwert, der auf einer Achse eines Gyrometers überschritten wird, aber auch ein schneller Temperaturwechsel oder ein Wechsel im Magnetfeld.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung ist vorgesehen, dass in einer Verarbeitungseinheit in Abhängigkeit vom Sensorsignal ein mit dem ersten potentiellen Bewegungsmodus korrespondierendes erstes Ereignis und/oder ein mit dem zweiten potentiellen Bewegungsmodus korrespondierendes zweites Ereignis bestimmt werden. Dadurch ist vorteilhaft eine besonders effiziente Verringerung der Rechenzeit möglich. Bevorzugt wird das erste Ereignis und/oder das zweite Ereignis zur Auslösung und/oder Kontrolle der Kalibrierung des Sensorsignals verwendet. Dadurch ist vorteilhaft eine besonders effiziente Kalibrierung des Sensorsignals möglich.

Gemäß einer anderen bevorzugten Weiterbildung ist vorgesehen, dass zur Erzeugung des Sensorsignals in der Sensoreinheit ein Beschleunigungssensor, ein Magnetfeldsensor, ein Gyroskop, ein Drucksensor und/oder ein Annäherungssensor verwendet werden. Dadurch ist vorteilhaft jeder bekannte Sensortyp mit dem erfindungsgemäßen Verfahren einsetzbar.

Gemäß einer bevorzugten Weiterbildung ist vorgesehen, dass das Sensorsignal gefiltert und/oder gespeichert wird, wobei bevorzugt eine erste Frequenzbandbreite in einer ersten Speichereinheit und eine zweite Frequenzbandbreite in einer zweiten Speichereinheit gespeichert wird, wobei weiter bevorzugt zur Bestimmung des ersten Ereignisses auf die erste Speichereinheit und/oder zur Bestimmung des zweiten Ereignisses auf die zweite Speichereinheit zugegriffen wird. Dadurch sind vorteilhaft eine besonders effiziente Speicherung und ein besonders effizienter Zugriff möglich.

Gemäß einer bevorzugten Weiterbildung ist vorgesehen, dass das Sensorsignal kalibriert und/oder korrigiert wird, wobei bevorzugt eine 0-g Offsetkorrektur durchgeführt wird. Dadurch ist vorteilhaft eine besonders effiziente Aufbereitung des Sensorsignals möglich.

Gemäß einer bevorzugten Weiterbildung ist vorgesehen, dass die Anforderung zur Zurverfügungstellung durch eine Anwendung erzeugt wird. Bevorzugt wird die Anforderung zur Zurverfügungstellung durch eine Nutzereingabe erzeugt. Dadurch ist vorteilhaft eine besonders effiziente Implementierung in eine Anwendung und/oder in eine Nutzer-Maschine-Schnittstelle möglich.

Ein weiterer Gegenstand der vorliegenden Erfindung betrifft eine Vorrichtung zur Steuerung eines elektrischen Geräts, wobei die Vorrichtung eine Sensoreinheit aufweist, wobei das Gerät in einem ersten potentiellen Bewegungsmodus und/oder in einem zweiten potentiellen Bewegungsmodus betreibbar ist, wobei in der Sensoreinheit ein Sensorsignal erzeugbar ist, wobei in Abhängigkeit einer Anforderung zur Zurverfügungstellung einer ersten Information hinsichtlich des Vorliegens des ersten potentiellen Bewegungsmodus und/oder einer zweiten Information hinsichtlich des Vorliegens des zweiten potentiellen Bewegungsmodus die erste Information und/oder die zweite Information in Abhängigkeit des Sensorsignals berechenbar ist.

Vorteilhaft ist eine optimale Energiesparfunktion möglich. Die Wachzeit jedes einzelnen Sensors bestimmt ist erheblich reduzierbar und auch die Laufzeit der Software selbst in der System CPU ist erheblich verringerbar. Da Berechnungen nicht unabhängig voneinander laufen, muss dieselbe Datenabfrage und dieselbe Ereigniskalkulation nicht mehr für jede Anwendung durchgeführt werden. Es gibt in diesem Fall eine gemeinsame Verwendung von Sensordaten für alle Anwendungen. Weiterhin muss nicht mehr für jede Anwendung gefiltert werden, wodurch Rechenzeit und Speicherkapazität erheblich verringert wird. Außerdem gibt es eine Logik, die es erlaubt, besonders ressourcenintensive Berechnungen zu deaktivieren, wenn sie nicht benötigt werden. Weiterhin ist das Hinzufügen oder Entfernen von Anwendungen ohne komplette Revalidierung der Steuersoftware möglich. Weiterhin erfordert der Austausch von Sensoren keine Neuanpassung der Datenabfrage und der Berechnungseinheiten. Weiterhin ist es möglich, die Berechnungsergebnisse gegenseitig zu validieren. Weiterhin ist es möglich, dass der Benutzer eigene Anwendungen erschaffen und implementieren kann. Weiterhin ist es möglich, die Berechnungsergebnisse zu synchronisieren.

Gemäß einer bevorzugten Weiterbildung ist vorgesehen, dass die Sensoreinheit einen Beschleunigungssensor, einen Magnetfeldsensor, ein Gyroskop, einen Drucksensor und/oder einen Annäherungssensor umfasst. Dadurch ist vorteilhaft jeder bekannte Sensortyp mit der erfindungsgemäßen Vorrichtung einsetzbar.

Gemäß einer anderen bevorzugten Weiterbildung ist vorgesehen, dass die Vorrichtung eine Verarbeitungseinheit aufweist, wobei in der Verarbeitungseinheit in Abhängigkeit vom Sensorsignal ein mit dem ersten potentiellen Bewegungsmodus korrespondierendes erstes Ereignis und/oder ein mit dem zweiten potentiellen Bewegungsmodus korrespondierendes zweites Ereignis bestimmbar ist, wobei bevorzugt das erste Ereignis und/oder das zweite Ereignis zur Auslösung und/oder Kontrolle der Kalibrierung des Sensorsignals verwendbar ist. Dadurch ist vorteilhaft eine besonders effiziente Reduzierung der Rechenzeit sowie eine besonders effiziente Kalibrierung des Sensorsignals möglich.

Ausführungsbeispiele der vorliegenden Erfindung sind in den Zeichnungen dargestellt und in der nachfolgenden Beschreibung näher erläutert.

### Kurze Beschreibung der Zeichnungen

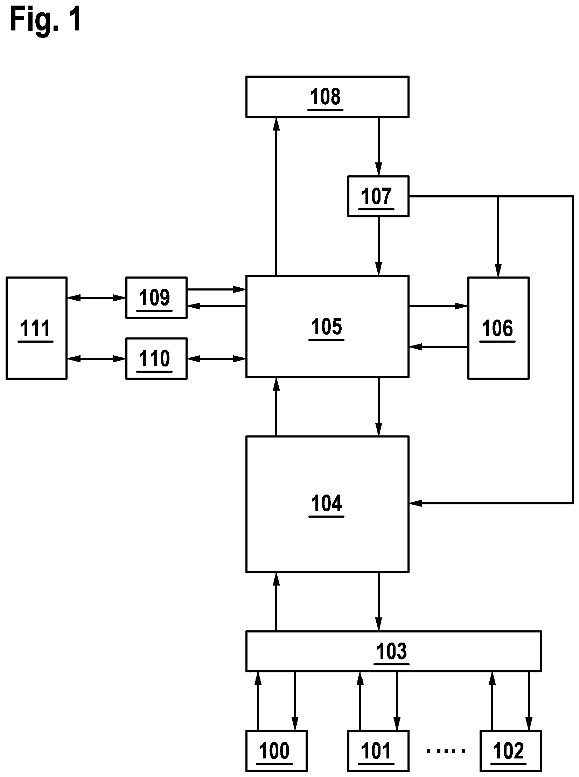

Es zeigt **Figur 1** ein Blockdiagramm einer beispielhaften Ausführungsform der vorliegenden Erfindung.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

**Figur 1** zeigt ein Blockdiagramm einer beispielhaften Ausführungsform der vorliegenden Erfindung. Die Blöcke 100, 101, 102 (im Folgenden auch Sensoreinheit genannt) repräsentieren Sensoren wie z.B. ein Beschleunigungssensor, ein Magnetfeldsensor, ein Gyroskop, ein Drucksensor und/oder ein Annäherungssensor. Block 103 dient als Abstraktionsschicht zwischen den Sensoren und dem Datenverarbeitungsblock 104 (im Folgenden auch erste und zweite Speichereinheit genannt). Datenverarbeitungsblock 104 umfasst einen Datenpuffer, eine Sensorkalibrierung und eine Datenkorrektur für jeden Sensor. Der Datenpuffer speichert kürzlich abgefragte Rohdaten für jeden Sensor. Bevorzugt werden zwei oder mehr Datenpuffer pro Sensor verwendet, wobei z.B. Beschleunigungsdaten von 1000 Hz Bandbreite, Tiefpassfilterdaten bis 200 Hz und bis 10 Hz in verschiedenen Datenpuffern abgelegt werden. Für jeden Sensor wird eine Sensorkalibrierung angeordnet, die kontinuierlich die Rohdaten beobachtet und Fehlerparameter berechnet wie z.B. 0-g Offset oder Empfindlichkeitsdeviationen. In der Datenkorrektur werden die Rohdaten korrigiert in Abhängigkeit von den Berechneten Fehlerparametern. Alle Anwendungen greifen auf die kalibrierten und korrigierten Sensordaten zu, die nur einmal berechnet werden. Datenverarbeitungsblock 104 umfasst einen Berechnungsblock, der höherwertige Ergebnisse berechnet, z.B. wird die geomagnetische Ausrichtung bestimmt basierend auf Kipp/Roll Informationen eines Beschleunigungssensors und Magnetfelddaten eines geomagnetischen Sensors. Die kalibrierten Daten wie Beschleunigungsdaten und die Ergebnisse wie die geomagnetische Ausrichtung werden höheren Schichten über die Zentrale Kontrolleinheit 105 zur Verfügung gestellt. Die Zentrale Kontrolleinheit 105
- fragt Daten vom Datenverarbeitungsblock 104 ab,
- stellt Daten einer Ereignis Detektionsmaschine 108 (im Folgenden auch Verarbeitungseinheit genannt) zur Verfügung,
- aktiviert/deaktiviert die Berechnung von Ereignisdetektoren wie angefordert von den aktivierten Anwendungen (wenn ein Ereignis nicht erforderlich ist, wird die Berechnung deaktiviert um Rechenzeit zu sparen),
- schaltet automatisch die nicht benötigten Sensoren ab oder schaltet sie in Energiesparmodus; dadurch muss das Host-system das energiesparen nicht überwachen, wodurch die Softwareintegration wesentlich vereinfacht wird,
- ruft die ressourcenintensiven Berechnungen nur auf, wenn diese unbedingt erforderlich sind,
- sendet die Ergebnisse (kalibrierte Daten, Anwendungsergebnisse und Ereignisse) an das Host System über UMM (unified memory map), UMM ist eine strukturierte RAM Sektion und
- beinhaltet Nutzerkonfigurationen vom Host-System über das UMM und ändert die Systemkonfiguration entsprechend (aktiviert/deaktiviert Anwendungen).

Eine große Anzahl an Anwendungen (Berührungsdetektion, Schrittzählen) basieren auf einem Satz an fundamentalen Ereignissen. Ein Ereignis ist beispielsweise ein Gierratengrenzwert, der auf einer Achse eines Gyrometers überschritten wird, aber auch ein schneller Temperaturwechsel oder ein Wechsel im Magnetfeld. Die Berechnung der Anwendungen basiert auf diesen Basisereignissen, weil diese nur einmal berechnet werden müssen und als Eingabe für viele Anwendungen verwendbar sind, wodurch vorteilhaft Rechenzeit gespart werden kann. Die Ereignis Detektionsmaschine 108 beobachtet die kalibrierten Datenpuffer aller Sensoren und zugeordnete Ereignisdetektionseinheiten berechnen kontinuierlich ob ein bestimmtes Ereignis auftritt. Diese detektierten Ereignisse werden in den Block 107 verschoben, der das aktuell detektierte Ereignis beinhaltet. Die Zentrale Kontrolleinheit 105 beobachtet das detektierte Ereignis ruft nur die Anwendung ab, die mit diesem detektierten Ereignis verbunden ist. Solang das auslösende Ereignis nicht auftritt, wird eine Anwendung nicht aktiviert.

Die Erfindung soll am Beispiel eines Doppeltipps verdeutlicht werden. Ein Beschleunigungssensor wird für die Detektion eines Doppeltipps auf einem Gerät verwendet. Im Ruhezustand wird das Ereignis "stabil" registriert. Wenn auf das Gerät getippt wird, wird ein Anstieg in den Beschleunigungsdaten gemessen, wobei dieser Anstieg von einem "Anstieg" Ereignisdetektor registriert wird. Die Ausführung der Anwendung "Doppeltipp" wird durch das Ereignis "Anstieg" ausgelöst, wobei die Anwendung zwei aufeinanderfolgende "stabil" Ereignisse und ein weiteres "Anstieg" Ereignis gefolgt von einem "stabil" Ereignis erwartet. Dieses entspricht einem Doppeltipp. Solange es kein "Anstieg" Ereignis gibt, wird die Anwendung nicht ausgeführt, wodurch Rechenzeit gespart wird. Sobald die logische Kette unterbrochen ist, wird die Anwendung gestoppt und wieder deaktiviert. Das detektierte Ereignis wird bevorzugt zurückgeführt in den Datenverarbeitungsblock 104, um die Kalibrierung der Sensordaten zu starten und/oder zu kontrollieren (z.B. wird die Kalibrierung des Beschleunigungssensors ausgelöst nachdem eine Temperaturänderung detektiert wurde). Weiterhin sind Plausibilitätsprüfungen möglich, z.B. Ereignis 1 ("Gerät stabil, nicht dynamisch bewegt") schließt Ereignis 2 ("Gerät wird mit 1,5 g beschleunigt") aus. Wenn also Ereignis 1 detektiert wird, kann die Kalkulation des Ereignisses 2 deaktiviert werden. Weiterhin können die Ereignisse als hochwertige Programmiersprache verwendet werden. Anstatt Sensor Rohdaten auszuwerten, können einfach die Events verwendet werden, um neue Anwendungen zu realisieren, wodurch der Nutzer auf einfache Weise eigene Anwendungen implementieren kann.

Die Anwendungseinheit 106 umfasst die aktuelle Anwendungslogik, wobei die Anwendungsergebnisse berechnet werden basierend auf Ereignissen, die von der Ereignis Detektionsmaschine 108 übermittelt wurden, und optional auf kalibrierte Daten des Datenverarbeitungsblocks 104. Die Anwendungseinheit 106 wird nur aufgerufen, wenn es erforderlich ist und "Auslöseereignisse" vorliegen. Die Anwendungen sind austauschbar, d.h. neue Anwendungen können hinzugefügt werden und alte Anwendungen können entfernt werden, wodurch eine modulare Struktur entsteht. Die UMM 109 umfasst akkumulierte Konfigurationsdaten und übermittelten Datenoutput sowie Ereignisstatus und Anwendungsergebnisse, und übermittelt diese an das Host-system 111 (z.B. ein Anwendungsprozessor eines Mobilfunkgeräts) strukturiert und synchronisiert. Der Unterbrechungsblock 110 erhält ERQ vom Host-system 111 und löst Ereignisse aus sowie überträgt IRQ zum Host-system 111 abhängig von internen Bedingungen. Es können interne Ereignisse oder Anwendungsergebnisse zu einer oder mehreren (Software oder Hardware) Unterbrechungslinien geleitet werden. Dieses ermöglicht erhebliches Energiesparen, insbesondere wenn die Architektur auf einer zugeordneten MCU implementiert ist. Die MCU kann dann die Wach/Schlaf Status des Host-systems 111 kontrollieren basierend auf internen Ereignissen oder Anwendungsergebnissen.

Die Erfindung soll an einem weiteren Beispiel verdeutlicht werden. Das Host System 111 z.B. ein Mobilfunkgerät stellt fest, dass zurzeit keine Anwendung läuft, die geomagnetisches Ausrichten erfordert (z.B. die Navigationsanwendung ist vom Nutzer geschlossen worden). Als Konsequenz wird die Anwendung "eCompass" deaktiviert in der UMM Konfiguration durch das Host-System 111. Dann wird der Magnetsensor deaktiviert, wobei die Abfrage der Magnetsensordaten gestoppt wird und die Berechnung der Anwendung "eCompass" deaktiviert sowie die Berechnung von zugeordneten Ereignissen gestoppt wird. Weiterhin wird der Beschleunigungssensor deaktiviert. Diese Aktionen erfolgen vorteilhaft ohne Eingaben durch das System oder den Nutzer. Wenn der Nutzer die Navigationsanwendung wieder aktiviert, aktiviert das host-system die eCompass Anwendung in der UMM Konfiguration. Die Magnetsensoren werden automatisch aktiviert, es erfolgt die Datenabfrage der Beschleunigungssensoren und die Anwendung eCompass wird wieder ausgeführt. Die Ereignis Detektionsmaschine 108 beobachtet kontinuierlich die kalibrierten Daten und wenn z.B. ein "Magnetfeldstörung" Ereignis detektiert wird, wird eine Offset-Korrektur des Magnetsensors durchgeführt.

## Patentansprüche

1. Verfahren zur Steuerung eines elektrischen Geräts mit einer Sensoreinheit (100, 101, 102), wobei das Gerät in einem ersten potentiellen Bewegungsmodus und/oder in einem zweiten potentiellen Bewegungsmodus betrieben wird, wobei in der Sensoreinheit (100, 101, 102) ein Sensorsignal erzeugt wird, wobei in Abhängigkeit einer Anforderung zur Zurverfügungstellung einer ersten Information hinsichtlich des Vorliegens des ersten potentiellen Bewegungsmodus und/oder einer zweiten Information hinsichtlich des Vorliegens des zweiten potentiellen Bewegungsmodus die erste Information und/oder die zweite Information in Abhängigkeit des Sensorsignals berechnet wird, **dadurch gekennzeichnet, dass** in einer Verarbeitungseinheit (108) in Abhängigkeit vom Sensorsignal ein mit dem ersten potentiellen Bewegungsmodus korrespondierendes erstes Ereignis und/oder ein mit dem zweiten potentiellen Bewegungsmodus korrespondierendes zweites Ereignis bestimmt werden, wobei das Sensorsignal gefiltert und/oder gespeichert wird, wobei eine erste Frequenzbandbreite in einer ersten Speichereinheit (104) und eine zweite Frequenzbandbreite in einer zweiten Speichereinheit (104) gespeichert wird, wobei zur Bestimmung des ersten Ereignisses auf die erste Speichereinheit (104) und/oder zur Bestimmung des zweiten Ereignisses auf die zweite Speichereinheit (104) zugegriffen wird.

2. Verfahren nach Anspruch 1, **dadurch gekennzeichnet, dass** das erste Ereignis und/oder das zweite Ereignis zur Auslösung und/oder Kontrolle der Kalibrierung des Sensorsignals verwendet wird.

3. Verfahren nach einem der vorhergehenden Ansprüche, **dadurch gekennzeichnet, dass** zur Erzeugung des Sensorsignals in der Sensoreinheit (100, 101, 102) ein Beschleunigungssensor, ein Magnetfeldsensor, ein Gyroskop, ein Drucksensor und/oder ein Annäherungssensor verwendet werden.

4. Verfahren nach einem der vorhergehenden Ansprüche, **dadurch gekennzeichnet, dass** das Sensorsignal kalibriert und/oder korrigiert wird, wobei bevorzugt eine 0-g Offsetkorrektur durchgeführt wird.

5. Verfahren nach einem der vorhergehenden Ansprüche, **dadurch gekennzeichnet, dass** die Anforderung zur Zurverfügungstellung durch eine Anwendung erzeugt wird.

6. Verfahren nach einem der vorhergehenden Ansprüche, **dadurch gekennzeichnet, dass** die Anforderung zur Zurverfügungstellung durch eine Nutzereingabe erzeugt wird.

7. Vorrichtung zur Steuerung eines elektrischen Geräts, wobei die Vorrichtung eine Sensoreinheit (100, 101, 102) aufweist, wobei das Gerät in einem ersten potentiellen Bewegungsmodus und/oder in einem zweiten potentiellen Bewegungsmodus betreibbar ist, wobei in der Sensoreinheit (100, 101, 102) ein Sensorsignal erzeugbar ist, wobei in Abhängigkeit einer Anforderung zur Zurverfügungstellung einer ersten Information hinsichtlich des Vorliegens des ersten potentiellen Bewegungsmodus und/oder einer zweiten Information hinsichtlich des Vorliegens des zweiten potentiellen Bewegungsmodus die erste Information und/oder die zweite Information in Abhängigkeit des Sensorsignals berechenbar ist, **dadurch gekennzeichnet, dass** die Vorrichtung eine Verarbeitungseinheit (108) aufweist, wobei in der Verarbeitungseinheit in Abhängigkeit vom Sensorsignal ein mit dem ersten potentiellen Bewegungsmodus korrespondierendes erstes Ereignis und/oder ein mit dem zweiten potentiellen Bewegungsmodus korrespondierendes zweites Ereignis bestimmbar ist, wobei die Vorrichtung derart konfiguriert ist, dass das Sensorsignal gefiltert und/oder gespeichert wird, wobei die Vorrichtung derart konfiguriert ist, dass eine erste Frequenzbandbreite in einer ersten Speichereinheit (104) und eine zweite Frequenzbandbreite in einer zweiten Speichereinheit (104) gespeichert wird, wobei die Vorrichtung derart konfiguriert ist, dass zur Bestimmung des ersten Ereignisses auf die erste Speichereinheit (104) und/oder zur Bestimmung des zweiten Ereignisses auf die zweite Speichereinheit (104) zugegriffen wird.

8. Vorrichtung nach Anspruch 7, **dadurch gekennzeichnet, dass** die Sensoreinheit (100, 101, 102) einen Beschleunigungssensor, einen Magnetfeldsensor, ein Gyroskop, einen Drucksensor und/oder einen Annäherungssensor umfasst.

9. Vorrichtung nach Anspruch 7 oder Anspruch 8, **dadurch gekennzeichnet, dass** das erste Ereignis und/oder das zweite Ereignis zur Auslösung und/oder Kontrolle der Kalibrierung des Sensorsignals verwendbar ist.

## Claims

1. Method for controlling an electrical device with a sensor unit (100, 101, 102), wherein the device is operated in a first potential movement mode and/or in a second potential movement mode, wherein a sensor signal is generated in the sensor unit (100, 101, 102), wherein, on the basis of a request to provide a first item of information relating to the presence of the first potential movement mode and/or a second item of information relating to the presence of the second potential movement mode, the first item of information and/or the second item of information is/are calculated on the basis of the sensor signal, **characterized in that** a first event corresponding to the first potential movement mode and/or a second event corresponding to the second potential movement mode is/are determined in a processing unit (108) on the basis of the sensor signal, wherein the sensor signal is filtered and/or stored, wherein a first frequency bandwidth is stored in a first storage unit (104) and a second frequency bandwidth is stored in a second storage unit (104), wherein the first storage unit (104) is accessed in order to determine the first event and/or the second storage unit (104) is accessed in order to determine the second event.

2. Method according to Claim 1, **characterized in that** the first event and/or the second event is/are used to initiate and/or control the calibration of the sensor signal.

3. Method according to one of the preceding claims, **characterized in that**, in order to generate the sensor signal, an acceleration sensor, a magnetic field sensor, a gyroscope, a pressure sensor and/or a proximity sensor is/are used in the sensor unit (100, 101, 102).

4. Method according to one of the preceding claims, **characterized in that** the sensor signal is calibrated and/or corrected, wherein a 0 g offset correction is preferably carried out.

5. Method according to one of the preceding claims, **characterized in that** the request to provide the information is generated by an application.

6. Method according to one of the preceding claims, **characterized in that** the request to provide the information is generated by a user input.

7. Apparatus for controlling an electrical device, wherein the apparatus has a sensor unit (100, 101, 102), wherein the device can be operated in a first potential movement mode and/or in a second potential movement mode, wherein a sensor signal can be generated in the sensor unit (100, 101, 102), wherein, on the basis of a request to provide a first item of information relating to the presence of the first potential movement mode and/or a second item of information relating to the presence of the second potential movement mode, the first item of information and/or the second item of information can be calculated on the basis of the sensor signal, **characterized in that** the apparatus has a processing unit (108), wherein a first event corresponding to the first potential movement mode and/or a second event corresponding to the second potential movement mode can be determined in the processing unit on the basis of the sensor signal, wherein the apparatus is configured in such a manner that the sensor signal is filtered and/or stored, wherein the apparatus is configured in such a manner that a first frequency bandwidth is stored in a first storage unit (104) and a second frequency bandwidth is stored in a second storage unit (104), wherein the apparatus is configured in such a manner that the first storage unit (104) is accessed in order to determine the first event and/or the second storage unit (104) is accessed in order to determine the second event.

8. Apparatus according to Claim 7, **characterized in that** the sensor unit (100, 101, 102) comprises an acceleration sensor, a magnetic field sensor, a gyroscope, a pressure sensor and/or a proximity sensor.

9. Apparatus according to Claim 7 or Claim 8, **characterized in that** the first event and/or the second event can be used to initiate and/or control the calibration of the sensor signal.

## Revendications

1. Procédé de commande d'un appareil électrique comportant une unité de détection (100, 101, 102), dans lequel l'appareil fonctionne dans un premier mode de mouvement potentiel et/ou dans un deuxième mode de mouvement potentiel, et dans lequel un signal de détection est généré dans l'unité de détection (100, 101, 102), dans lequel, conformément à une demande de fourniture d'une première information concernant la présence du premier mode de mouvement potentiel et/ou d'une deuxième information concernant la présence du deuxième mode de mouvement potentiel, la première information et/ou la deuxième information est calculée en fonction du signal de capteur, **caractérisé en ce qu'**un premier événement correspondant au premier mode de mouvement potentiel et/ou un deuxième événement correspondant au deuxième mode de mouvement potentiel sont déterminés dans une unité de traitement (108) en fonction du signal de capteur, dans lequel le signal de capteur est filtré et/ou stocké, dans lequel une première largeur de bande de fréquence est stockée dans une première unité de mémoire (104) et une deuxième largeur de bande de fréquence est stockée dans une deuxième unité de mémoire (104), dans lequel un accès à la première unité de stockage (104) est effectué pour déterminer le premier événement et/ou à la deuxième unité de stockage (104) pour déterminer le deuxième événement.

2. Procédé selon la revendication 1, **caractérisé en ce que** le premier événement et/ou le deuxième événement est utilisé pour déclencher et/ou contrôler l'étalonnage du signal de capteur.

3. Procédé selon l'une des revendications précédentes, **caractérisé en ce qu'**un capteur d'accélération, un capteur de champ magnétique, un gyroscope, un capteur de pression et/ou un capteur de proximité sont utilisés pour générer le signal de capteur dans l'unité de détection (100, 101, 102).

4. Procédé selon l'une des revendications précédentes, **caractérisé en ce que** le signal de capteur est étalonné et/ou corrigé, dans lequel une correction de décalage de 0 g est de préférence effectuée.

5. Procédé selon l'une des revendications précédentes, **caractérisé en ce que** la demande de fourniture est générée par une application.

6. Procédé selon l'une des revendications précédentes, **caractérisé en ce que** la demande de fourniture est générée par une entrée d'utilisateur.

7. Dispositif de commande d'un appareil électrique, dans lequel le dispositif comprend une unité de détection (100, 101, 102), dans lequel l'appareil peut être mis en fonctionnement dans un premier mode de mouvement potentiel et/ou dans un deuxième mode de mouvement potentiel, dans lequel un signal de capteur peut être généré dans l'unité de détection (100, 101, 102), dans lequel, conformément à une demande de fourniture d'une première information concernant la présence du premier mode de mouvement potentiel et/ou d'une deuxième information concernant la présence du deuxième mode de mouvement potentiel, la première information et/ou la deuxième information peut être calculée en fonction du signal capteur, **caractérisé en ce que** le dispositif comporte une unité de traitement (108), dans lequel un premier événement correspondant au premier mode de mouvement potentiel et/ou un deuxième événement correspondant au deuxième mode de mouvement potentiel peuvent être déterminés en fonction du signal de capteur, dans lequel le dispositif est configuré de manière à ce que le signal de capteur soit filtré et/ou stocké, dans lequel le dispositif est configuré de manière à ce qu'une première largeur de bande de fréquence soit stockée dans une première unité de mémoire (104) et à ce qu'une deuxième largeur de bande de fréquence soit stockée dans une deuxième unité de mémoire (104), dans lequel le dispositif est configuré de manière à ce qu'un accès soit effectué à la première unité de stockage (104) pour déterminer le premier événement et/ou à la deuxième unité de stockage (104) pour déterminer le deuxième événement.

8. Dispositif selon la revendication 7, **caractérisé en ce que** l'unité de détection (100, 101, 102) comprend un capteur d'accélération, un capteur de champ magnétique, un gyroscope, un capteur de pression et/ou un capteur de proximité.

9. Dispositif selon la revendication 7 ou la revendication 8, **caractérisé en ce que** le premier événement et/ou le deuxième événement peut être utilisé pour déclencher et/ou contrôler l'étalonnage du signal de capteur.
